# EUROPÄISCHE PATENTSCHRIFT

(11) **EP 2 362 522 B1**
(45) Veröffentlichungstag und Bekanntmachung des Hinweises auf die Patenterteilung: **28.06.2017**
(21) Anmeldenummer: 11155935.7
(22) Anmeldetag: 25.02.2011
(51) Int. Cl.: B60L 11/18, H02M 7/155, H02M 7/17, H02M 7/19, H02M 7/217, H02M 7/23, H02M 7/25, H02M 1/084, H02J 7/02

(54) **Ladegerät für ein Elektrofahrzeug**
Charging device for an electric car
Appareil de chargement pour un véhicule électrique

(30) Priorität: 25.02.2010 DE 102010009343; 09.03.2010 DE 102010010722
(43) Veröffentlichungstag der Anmeldung: 31.08.2011
(73) Patentinhaber: EDAG Engineering GmbH, 65205 Wiesbaden (DE)
(72) Erfinder: Mager, Torsten, 36318 Schwalmtal (DE); Türk, Holger, 92224 Amberg (DE)
(74) Vertreter: Schwabe - Sandmair - Marx

(56) Entgegenhaltungen:
- WO-A1-03/079529
- WO-A2-2007/025855
- JP-A- 8 331 851
- JP-A- 56 006 675
- JP-A- 57 186 985
- JP-A- 2003 169 477
- US-A- 5 946 205
- OLIVIER G ET AL: "A 5 KV, 1.5 MW, VARIABLE DC SOURCE", CONFERENCE RECORD OF THE INDUSTRY APPLICATIONS SOCIETY ANNUAL MEETING (IAS). PITTSBURGH, OCT. 2 - 7, 1988; [CONFERENCE RECORD OF THE INDUSTRY APPLICATIONS SOCIETY ANNUAL MEETING (IAS)], NEW YORK, IEEE, US, Bd. PART 01, 2. Oktober 1988 (1988-10-02), Seiten 980-985, XP000093939,
- ZHANG R ET AL: "Four-legged three-phase PFC rectifier with fault tolerant capability", POWER ELECTRONICS SPECIALISTS CONFERENCE, 2000. PESC 00. 2000 IEEE 31S T ANNUAL 18-23 JUNE 2000, PISCATAWAY, NJ, USA,IEEE, Bd. 1, 18. Juni 2000 (2000-06-18), Seiten 359-364, XP010517263, ISBN: 978-0-7803-5692-4

## Beschreibung

Die vorliegende Erfindung betrifft eine Schaltung, mit welcher elektrische Energie von einem Versorgungsnetz zur Speisung eines Energiespeichers übertragen werden kann, vorzugsweise um einen Energiespeicher, wie zum Beispiel einen Akkumulator oder eine Batterie, in einem mobilen Gerät, wie zum Beispiel einem Fahrzeug, einem Auto, einem Motorrad, einem Schiff oder einem Flugzeug, zu laden.

Mobile Einheiten oder Fahrzeuge, welche elektrische Energie als Antriebsenergie zumindest zum Teil, als sogenannte Hybridfahrzeuge, oder als vollständige Elektrofahrzeuge verwenden, müssen vor der eigentlichen Verwendung aufgeladen werden, wenn der Elektroantrieb verwendet werden soll, was zumindest bei Elektrofahrzeugen gewöhnlich durch Einspeisung von elektrischer Energie aus einem Versorgungsnetz, wie zum Beispiel einem öffentlichen Stromnetz oder einer hierfür speziell ausgelegten Ladestelle oder Tankstelle, erfolgen kann. Das zur Aufladung zur Verfügung stehende Einspeisenetz kann je nach Land oder Ladeort unterschiedlich ausgelegt sein und kann zum Beispiel ein Zwei-Phasen-Netz, ein Drei-Phasen-Netz ohne Nullleiter oder ein Drei-Phasen-Netz mit Nullleiter sein. Dabei kann die zur Verfügung stehende Qualität des Netzes stark schwanken.

Der in dem Fahrzeug zur Verfügung stehende Energiespeicher oder die Batterie soll möglichst schnell und effektiv aufgeladen werden, wobei sich während des Ladevorgangs die Netzspannung und der zum Aufladen erforderliche Ladestrom über den kompletten Leistungsbereich bewegen kann, also zum Beispiel zwischen 0 Prozent und 100 Prozent des maximalen Ladestroms betragen kann, um je nach aus dem Netz angebotener und zur Verfügung stehender Leistungen eine möglichst große Ladeenergie in möglichst kurzer Zeit aus dem Netz zu entnehmen und zum Laden des Energiespeichers zu verwenden.

Akkumulatoren in Elektrofahrzeugen oder in Hybridfahrzeugen können sowohl an einer externen zum Beispiel stationären Ladestation aufgeladen werden oder durch einen zum Beispiel im Fahrzeug eingebauten und von einem Verbrennungsmotor betriebenen Generator geladen werden (Hybridfahrzeug). Ebenso können die Akkumulatoren zum Beispiel auch durch bei Bremsvorgängen als Generator arbeitende Elektromotoren aufgeladen werden.

Die JP 57 186985 A beschreibt einen Mehrphasen-Gleichrichter, wobei ein Spannungsabfall detektiert und ein der fehlerhaften Spannungsquelle zugeordneter Gleichrichter abgeschaltet wird.

Die JP 2003 169477 A offenbart ein Verfahren zur Verringerung der Restwelligkeit des Gleichstroms bei einem Stromwandler.

Aus dem Aufsatz von Olivier G. und Shankar N."A 5 kV, 1.5 MW, variable DC source", Conference Record of the Industry Applications Society Annual Meeting (IAS). Pittsburgh, Oct. 2 - 7, 1988; [Conference Record of the Industry Applications Society Annual Meeting (IAS)], New Your, IEEE, US, Bd. Part 01, 2. Oktober 1988 (1988-10-02), Seiten 980 - 985, XP000093939, ist eine Schaltung für die Hochspannungs-Gleichstrom-Übertragung bekannt.

Die JP 56 006675 A beschreibt ein Verfahren zur Verringerung eines Momentanstroms.

Aus der US 5,946,205 ist ein Stromwandlungssystems mit seriell verschalteten Wandlern bekannt.

Die WO 06/079529 A1 beschreibt einen Breitband AC/DC-Wandler.

Die WO 2007/025855 A2 offenbart eine Generatorvorrichtung, z.B. eine Lichtmaschine eines Kraftfahrzeugs, welche einen Generator umfasst und ist ausgangsseitig elektrisch mit mindestens zwei Batterien koppelbar. Die Generatorvorrichtung umfasst für die mindestens zwei Batterien jeweils eine Gleichrichterschaltung, die jeweils so ausgebildet und steuerbar sind, dass der jeweiligen Batterie unabhängig von der jeweils mindestens einen anderen Batterie von dem Generator erzeugte Energie zuführbar ist.

Es ist eine Aufgabe der vorliegenden Erfindung eine Vorrichtung und ein Verfahren vorzuschlagen, welche ein möglichst gutes oder optimales Nutzen einer zur Verfügung stehenden Netzspannung oder Netzleistung zum Beispiel zum Aufladen eines Akkumulators ermöglichen.

Diese Aufgabe wird durch die Gegenstände der unabhängigen Ansprüche gelöst. Vorteilhafte Ausführungsformen sind in den abhängigen Ansprüchen definiert.

Eine Vorrichtung und insbesondere eine Schaltung zur Verbindung einer Leistungseinheit, wie zum Beispiel einer Ladeeinheit für einen Akkumulator oder eine Batterie, mit einem Versorgungsnetz mit mindestens zwei Anschlüssen oder mindestens einer Phase, weist mindestens zwei und vorzugsweise drei oder auch mehr als drei Anschlusseinheiten oder Stufen auf. Dabei ist jede der mindestens zwei Anschlusseinheiten oder Stufen so ausgelegt, dass diese jeweils mit allen Anschlüssen oder Leitern des Versorgungsnetzes verbunden werden kann.

In einer ersten einfachen Ausführungsform sind beispielsweise nur zwei Anschlusseinheiten oder Stufen vorgesehen, welche beispielsweise mit einem Versorgungsnetz mit zwei Anschlüssen verbunden werden können, wobei die beiden Anschlusseinheiten oder Stufen jeweils zwei Anschlüsse oder Kontakte aufweisen, um jede der Anschlusseinheiten vollständig mit dem Versorgungsnetz zu verbinden. Weist das Versorgungsnetz drei Anschlüsse oder drei Phasen auf, so ist jede der mindestens zwei Anschlusseinheiten oder Stufen mit drei Verbindungsmöglichkeiten oder Eingangskontakten zu versehen, um jede der Stufen vollständig mit dem Versorgungsnetz zu verbinden. Vorzugsweise sind drei Anschlusseinheiten oder Stufen vorgesehen, welche jeweils mindestens zwei, vorzugsweise drei und besonders bevorzugt jeweils vier oder auch mehr als vier Anschlüsse aufweisen, so dass jede Stufe mit jeder Leitung oder Phase des Versorgungsnetzes (beispielsweise eines Drei-Phasen-Stromnetzes mit Nullleiter: L1, L2, L3 und N) verbunden werden kann. Werden zum Beispiel drei Anschlusseinheiten oder Stufen mit beispielsweise jeweils drei oder jeweils vier Eingangssignalen oder Kontaktmöglichkeiten vorgesehen, so kann jede einzelne der Stufen unabhängig von einer anderen Stufe zur Ausnutzung der Spannungsdifferenz von mindestens zwei beliebigen Leitungen des Versorgungsnetzes verwendet werden. Gibt es zum Beispiel auf Grund von Schwankungen oder einer Störung des Versorgungsnetzes oder auf Grund eines zum Beispiel korrodierten und schlecht leitenden Kontaktes Probleme mit der Stabilität und damit Leistungsfähigkeit einer Phase des Versorgungsnetzes, so kann eine davon betroffene Stufe unabhängig vom Betrieb der anderen Stufen die aus der betroffenen Phase des Versorgungsnetzes entnommene Leistung verringern oder sogar vollständig Herunterfahren und kann zum Beispiel alternativ auch auf die Leistungsaufnahme aus einer oder mehrerer anderer zum Beispiel von der Leistungsstörung nicht betroffenen Phasen des Versorgungsnetzes umschalten. Hierdurch könnte beispielsweise zwar eine asymmetrische Belastung des Versorgungsnetzes auftreten, jedoch würde die unter den gegebenen Umständen dem Versorgungsnetz zu entnehmende Leistung möglichst groß, da in Abhängigkeit von der Stabilität oder Leistungsfähigkeit des Netzes eine adaptive Leistungsaufnahme möglich ist. Einem Drei-Phasen-Netz kann also zum Beispiel Leistung an allen drei Phasen oder auch nur an zwei oder einer Phase entnommen werden.

Die einzelnen Anschlusseinheiten oder Stufen können als Gleichrichterbrücken ausgebildet werden, wobei beispielsweise eine Verbindung oder Anschlussmöglichkeit mit einer Leitung oder Phase eines externen Versorgungsnetzes jeweils in einem separaten Ventilstrang vorgesehen werden kann, wobei zur Verbindung mit zwei, drei oder vier Phasen oder Leitungen des externen Versorgungsnetzes auch eine entsprechende Anzahl von zum Beispiel zwei, drei oder vier Ventilsträngen vorgesehen werden kann. Der einzelne Ventilstrang kann zum Beispiel so ausgebildet werden, dass auf beiden Seiten der Verbindung zu einer Leitung oder Phase des externen Versorgungsnetzes jeweils ein Gleichrichterelement, wie zum Beispiel eine Diode oder ein Thyristor, vorgesehen werden kann. Dabei weisen die Gleichrichterelemente in die gleiche Richtung, so dass beispielsweise zwischen der Kathode eines Gleichrichterelements und der Anode eines anderen Gleichrichterelements die Verbindungsstelle oder der Kontakt zu dem externen Versorgungsnetz vorgesehen ist. Die jeweils andere (außenliegende) Seite der beiden Gleichrichter kann parallel geschaltet werden zu den anderen vorgesehen Ventilsträngen, um eine Gleichrichterbrücke zu erhalten. Die Gleichrichterbrücke kann beispielsweise ungesteuert sein und als Stromrichtungselemente beispielsweise Dioden aufweisen. Ebenso kann die Gleichrichterbrücke als halbgesteuerte Gleichrichterbrücke ausgebildet sein, wobei in einem Ventilstrang jeweils (mindestens) eine Diode und (mindestens) ein gesteuerter Gleichrichter, beispielsweise ein Thyristor, vorgesehen sind. Ebenso kann die Gleichrichterbrücke als vollgesteuerte Gleichrichterbrücke ausgebildet sein, wobei jeweils auf beiden Seiten des Anschlusses zum externen Versorgungsnetz in jedem Ventilstrang mindestens ein steuerbares Gleichrichterelement, wie beispielsweise ein Thyristor, vorgesehen ist. Vorzugsweise weisen die zueinander parallel geschalteten Ventilstränge der Gleichrichterbrücke Stromrichtungselemente auf, welche einen Stromfluss nur in die gleiche Richtung ermöglichen und jeweils in die Gegenrichtung sperren.

Wird die Gleichrichterbrücke als halbgesteuerte oder als vollgesteuerte Gleichrichterbrücke ausgebildet, so kann bei vollständiger Verbindung der Gleichrichterbrücke mit dem Versorgungsnetz, bei welcher jede Leitung oder jede Phase des Versorgungsnetzes mit mindestens einem Ventilstrang verbunden ist, von jeder einzelnen Stufe auf das vollständige Netz zugegriffen werden. Dabei können in Abhängigkeit von den Signalen einer Steuerung, welche beispielsweise die Phasen oder die Stabilität des Versorgungsnetzes misst, einzelne Phasen zu der Stufe hinzugeschaltet oder von der Stufe getrennt werden, so dass jede einzelne Stufe selektiv auf jede Phase oder jede Kombination von Phasen oder Leitungen des Versorgungsnetzes zugreifen kann. Verschiedene Stufen können auf die gleichen oder verschiedene (Kombinationen von) Phasen oder Leitern unabhängig voneinander zugreifen.

Beispielsweise kann jede Stufe oder jeder Einzelgleichrichter das Versorgungsnetz bei Verbindung mit allen Leitungen des Versorgungsnetzes symmetrisch belasten oder kann bei einzelnen abgeschalteten Ventilsträngen Energie aus einem Teilnetz oder beispielsweise dem Halb-Phasen-Netz entnehmen.

Bei Ausfall einer Phase kann die betreffende Phase von den Stufen oder Gleichrichtern abgetrennt werden und somit kann zum Beispiel bei einem zur Verfügung stehenden Drei-Phasen-Netz der Betrieb unter Verwendung der verbleibenden zwei Phasen mit reduzierter Leistung fortgesetzt werden. Dabei können die zur Verfügung stehenden zum Beispiel zwei, drei oder vier Stufen so verschaltet werden, dass beispielsweise alle Stufen die verbleibenden zwei Phasen ausnutzen. Ebenso ist es möglich, dass eine Stufe beispielsweise nur eine Phase im Zusammenhang mit dem Nullleiter zur Energienentnahme aus dem Netz nutzt und eine weitere Stufe eine andere Phase in Verbindung mit dem Nullleiter nutzt und beispielsweise eine optional vorgesehene dritte Stufe die zwischen den beiden zur Verfügung stehenden Phasen vorhandene Spannung zur Energieaufnahme ausnutzt.

Somit kann durch abschaltbare und zuschaltbare Gleichrichter-Pfade eine Phasenselektivität erreicht und somit ein adaptives Laden auch bei zum Beispiel einer asymmetrischen Versorgungsspannung mit einem guten Wirkungsgrad ermöglicht werden.

Es ist möglich, dass zwei, drei, vier oder mehr als vier redundante Anschlusseinheiten oder Stufen zur Verfügung gestellt werden, welche zum Beispiel phasenversetzt arbeiten und somit adaptiv eine möglichst gute Energieentnahme aus einem Versorgungsnetz ermöglichen können.

In Abhängigkeit von der Qualität oder Stabilität (der Spannung) einer Phase kann auch die Leistungsaufnahme unter Verwendung dieser Phase reduziert werden, um einen Zusammenbruch dieser Phase zu verhindern.

Jede Anschlusseinheit oder Stufe kann optional mit einem eigenen zum Beispiel vorgeschalteten Netzfilter (EMI; electromagnetic interference) verbunden sein, um die elektromagnetische Verträglichkeit der nachfolgenden Schaltung gegen Störungen aus dem Stromnetz zu verbessern. Der Netzfilter kann beispielsweise auf bekannte Art als Tiefpass aus Induktivitäten und Kondensatoren oder als Gleichtaktunterdrücker aufgebaut werden. Es ist sowohl möglich, dass jede Anschlusseinheit oder Stufe mit einem eigenen Netzfilter verbunden ist, als auch, dass alle Anschlusseinheiten oder Stufen mit dem gleichen Netzfilter verbunden sind.

Optional kann jede Anschlusseinheit oder Stufe oder auch jeder Netzfilter mit einer zum Beispiel nachgelagerten Schaltung zur Blindleistungskompensation (PFC; power factor correction) verbunden sein, um unerwünschten Blindstrom und die damit verbundene Blindleistung zu reduzieren.

Die Ausgangssignale oder Ausgangsspannungen der einzelnen Anschlusseinheiten oder Stufen oder der optional vorgeschalteten Netzfilter und/oder optional nachgeschalteten Blindleistungkompensationsschaltungen können nachfolgend zum Beispiel parallel geschaltet werden und können zu einem Zwischenkreis oder einer Zwischenspannung zusammengefasst werden, mittels welchem die aus dem Versorgungsnetz entnommene Energie zu der zu ladenden Batterie und vorzugsweise zu vorgeschaltenen Gleichstromwandlern übertragen werden kann.

Es ist eine Steuerung oder ein Controller vorgesehen, welcher die Spannung oder Leistungsfähigkeit des Versorgungsnetzes misst, beispielsweise die Amplitude einer jeden Phase des Versorgungsnetzes, und welcher in Abhängigkeit von der festgestellten Stabilität oder Leistungsfähigkeit des Versorgungsnetzes die oben beschriebenen Anschlusseinheiten oder Stufen selektiv ansteuern, also zum Beispiel hinzuschalten oder trennen kann, um dem Versorgungsnetz eine möglichst große Menge an Energie entnehmen zu können.

Beispielsweise kann die Steuerung feststellen, dass eine Phase des Versorgungsnetzes abfällt und kann die von dem Abfall der betroffenen Phase betroffene(n) Stufe(n) selektiv abschalten oder zur Leistungsentnahme auf andere nicht betroffene oder leistungsgeschwächte Phasen umschalten, um eine hohe Gesamtenergieaufnahme aus dem Versorgungsnetz zu ermöglichen. Ebenso kann eine oder mehrere Stufen wieder zur Leistungsentnahme unter Hinzuziehung der zum Beispiel nur vorübergehend geschwächten oder zusammengebrochenen Phase verwendet werden, wenn von der Steuerung festgestellt wird, dass zum Beispiel die Spannung der abgeschwächten Phase wieder zunimmt oder wieder vollständig zur Verfügung steht.
Dabei können von der Steuerung die einzelnen Anschlusseinheiten oder Stufen unabhängig voneinander allen Anschlüssen oder Phasen des Versorgungsnetzes einzeln oder ausgewählt zum Beispiel auch in Kombination zugeschaltet oder selektiv einzeln oder in Kombination von einem oder mehreren der Anschlüsse der Versorgungsleitung getrennt werden, um je nach Qualität oder Leistungsfähigkeit des Versorgungsnetzes einen möglichst guten oder optimalen Leistungsabgriff aus dem Versorgungsnetz zu ermöglichen.
Jede Stufe oder jeder Lader kann somit auf ein anderes (Unter-) Netz wechseln, wobei die Zuordnung variabel ist.
Gemäß einem weiteren Aspekt bezieht sich die Erfindung auf ein Verfahren zur Steuerung der Verbindung einer Leistungseinheit, wie zum Beispiel einer Ladeeinheit für einen Akkumulator oder eine Batterie, mit einem Versorgungsnetz mit mindestens zwei und vorzugsweise drei, vier oder mehr Anschlüssen, wobei jeder Anschluss oder jede Phase des Versorgungsnetzes überwacht oder gemessen wird und wobei mindestens zwei und vorzugsweise drei, vier oder mehr wie oben beschriebene Anschlusseinheiten oder Stufen vorgesehen sind, welche jeweils mit jeder der Phasen oder Anschlüsse des Versorgungsnetzes (vollständig) individuell steuerbar verbunden oder zum Beispiel selektiv getrennt werden können, wobei in Abhängigkeit von der Überwachung oder Messung der Spannung oder Leistungsfähigkeit der Spannungen, Ströme oder Leistung der einzelnen Anschlüsse oder Phasen des Versorgungsnetzes einzelne Stufen selektiv mit einzelnen Anschlüssen oder Phasen des Versorgungsnetzes verbunden oder davon getrennt werden können. Hierdurch kann eine möglichst gute Ausnutzung der von dem Versorgungsnetz zur Verfügung gestellten Energie ermöglicht werden.
Eine Schaltung zum Wandeln einer mittels zum Beispiel der oben beschriebenen Anordnung gleichgerichteten Netzspannung in eine Ladespannung zum Laden einer Batterie weist eine Potentialtrennstelle zum Beispiel in Form eines an sich bekannten Transformators auf, wobei die vorgeschalteten Brückenschaltungen zum Ansteuern der Potentialtrennstelle oder des Transformators so ausgebildet sind, dass kein Kurzschlusspfad entstehen kann, wodurch die Gefahr einer Querzündung der zum Beispiel vorgeschalteten Kondensatoren verringert oder sogar ausgeschlossen werden kann.

Hierzu kann beispielsweise der Transformator zwei Primärwicklungen aufweisen, welche jeweils von einer vorgelagerter Brückenschaltung gespeist werden, wobei die beiden Brückenschaltungen zueinander seriell geschaltet sind. Die beiden vorgelagerten Brückenschaltungen können prinzipiell gleich aufgebaut sein und sind so ausgelegt, dass die von ihnen jeweils gespeiste Primärwicklung des Transformators im Brückzweig liegt. Der Brückenzweig ist zwischen zwei Ventilsträngen geschaltet. Dabei kann eine Seite der Brücke durch ein Schaltelement, wie beispielsweise einen Transistor, vorzugsweise einen Leistungs-MOSFET, einen Thyristor oder IGBT, gebildet werden, welcher in Serie zu einem Stromrichter, zum Beispiel einer Diode, geschaltet ist. Der für die Brücke hierzu parallel geschaltete Ventilstrang weist ebenso eine Serienschaltung eines Gleichrichtelements, wie zum Beispiel einer Diode, und eines Schaltelements auf, wobei zwar die Ausrichtungen oder die Durchflussrichtung der parallel geschalteten Gleichrichtelemente gleich gerichtet ist, jedoch die Anordnung von Gleichrichtelement und Schaltelement vertauscht ist. Die im Brückezweig liegende Primärwicklung oder Induktivität ist somit auf einer Seite der Brücke zwischen einem Schaltelement und zum Beispiel einer Anode einer Diode verbunden und ist auf der anderen Seite der Brücke zwischen einer Kathode der Diode und einem weiteren Schaltelement angeschlossen. In der Brücke liegen somit die Gleichrichtelemente und die Schaltelemente kreuzförmig einander gegenüber. Die Stromrichtelemente oder Dioden sind in der Brücke so angeordnet, dass sie bezüglich der von außen anliegenden Gleichspannung in Sperrrichtung liegen, das heißt die im Brückenzweig liegende Transformatorwicklung kann nicht von dem außen anliegenden Gleichstrom, welcher zum Beispiel aus einem vorgeschalteten Kondensator kommen kann, über den durch die Gleichrichterelemente oder Dioden gesperrten Strompfad durchflossen werden. Hierzu ist es erforderlich, dass die Schaltelemente oder Transistoren, welche in der Brückenschaltung diagonal einander gegenüberliegen, gleichzeitig angeschaltet werden. Somit ist eine Entladung des vorgeschalteten Kondensators nur über die im Brückenzweig vorgesehene Primärspule oder Transformatorwicklung möglich, wobei optional ergänzend auch eine Induktivität oder eine zusätzlich vorgesehene Spule oder Drossel durchflossen werden muss, was als strombegrenzendes Element wirkt und somit einen Kurzschluss verhindert.

Die zu der oben beschriebenen Brücke identisch ausgebildete zweite Brücke steuert eine ebenfalls im Brückenzweig liegende zweite Primärwicklung des Transformators an, welche jedoch in Gegenrichtung zu der ersten primärseitigen Transformatorwicklung gepolt ist.

Die Schaltelemente einer Brücke werden jeweils gleichzeitig oder parallel angesteuert und werden vorzugsweise phasenversetzt zu den Schaltelementen der dazu seriell geschalteten Brücke angesteuert. Beispielsweise werden die Schaltelemente der (oberen) Brückenschaltung angeschaltet, wenn die Schaltelemente der (unteren) Brückenschaltung ausgeschaltet werden und umgekehrt, wodurch eine Phasenversetzung von 180 Grad realisiert werden kann.

Sekundärseitig ist die Potenzialtrennstelle oder der Transformator auf bekannte Art aufgebaut und kann mit der zugehörigen Schaltung eine Ladespannung beziehungsweise einen Gleichstrom zum Laden der damit verbunden Batterie erzeugen.

Durch die erfindungsgemäße Ansteuerung der primärseitigen Wicklungen des Transformators kann ein Schaltverhalten wie bei einer Vollbrücke realisiert werden, wobei jedoch im Gegensatz hierzu die Querzündgefahr angeschlossen werden kann. Die den seriell geschalteten Brückenschaltungen vorgelagerten seriell geschalteten Kondensatoren können sich somit nicht über einen Kurzschluss entladen. Im Falle einer festgestellten unerwünschten Entladung der vorgeschalteten Transformatoren über die im Brückenzweig vorhandene Induktivität kann mittels eines Überwachungselements, wie beispielsweise eines Strommessgeräts oder Stromerfassungselements, festgestellt werden, dass eine unerwünschte Entladung in Form eines durch die Induktivität gebremst ansteigenden Entladestroms stattfindet, so dass die Schaltung zum Beispiel mittels der in der Brückenschaltung vorgesehenen Schaltelemente oder optional weiterer im Entladepfad der Kondensatoren liegenden Schaltelemenete geöffnet werden kann, wodurch die (Kurzschluss)-Entladung der Kondensatoren und somit eine mögliche Beschädigung oder Zerstörung der Kondensatoren verhindert werden kann.

Die den Stromwandlern vorgelagerten seriell geschalteten Kondensatoren können die nachgelagerte Schaltung vor einer schnellen Spannungsänderung oder Störung, wie zum Beispiel durch Blitzeinschlag verursachte Spannungsspitzen, schützen. Da unerwünschte Spannungsspitzen zwar eine große Spannung, jedoch nur eine geringe Leistung oder Stromstärke aufweisen, kann eine solche Spannungsstörung die Kondensatoren nicht nennenswert umladen, so dass eine Unempfindlichkeit bezüglich schneller Spannungsänderungen realisiert werden kann.

Auf Grund der seriellen Schaltung der die Primärwicklungen des Transformators ansteuernden Brücken muss jede einzelne Brücke nur noch die Hälfte des für die Gesamtschaltung geforderten Sperrvermögens aufweisen, so dass mit Standard-Bauteilen die doppelte Spannungsfestigkeit realisiert werden kann.

Bei einem Verfahren zum Ansteuern eines Wandlers, insbesondere eines DC/DC-Wandlers, können die Schaltelemente in der oben beschriebenen Schaltung so angesteuert werden, dass die zu der gleichen Brücke gehörenden Schaltelemente jeweils gleichzeitig an- und abgeschaltet werden und die zu verschiedenen Brücken gehörenden Schaltelemente zueinander versetzt und vorzugsweise um 180 Grad zueinander versetzt geschaltet werden.

Vorzugsweise wird eine Messung des in jedem Brückenzweig oder des durch die Brücke fließenden Stroms vorgenommen. Falls festegestellt wird, dass ein unerwünschter Anstieg des zum Beispiel in dem Brückenzweig oder durch die Brücke fließenden Stroms stattfindet, welcher möglicherweise zu einer Beschädigung eines vorgeschalteten Kondensators führen kann, wird der Stromfluss unterbrochen oder der Kondensator von der Schaltung getrennt.

Eine Schaltung zum Wandeln einer gleichgerichteten Netzspannung in eine Ladespannung zum Laden einer Batterie oder eine Akkumulators hat zum Beispiel eine Potentialtrennstelle oder erste Primärwicklung eines Transformators, welche von einer ersten Brückenschaltung angesteuert wird und eine Potentialtrennstelle oder zweite primärseitige Wicklung eines Transformators wird von einer zweiten Brückenschaltung angesteuert, wobei die Brücken so ausgelegt sind, dass kein Kurzschlusspfad entstehen kann. Die Potentialtrennstellen oder primärseitigen Transformatorwicklungen können in den Brückenzweigen der Brücken liegen. In jedem Pfad oder Ventilstrang einer Brücke kann mindestens ein Gleichrichterelement und mindestens ein Schaltelement angeordnet sein, wobei die Gleichrichterelemente der beiden Brückenseiten ebenso wie die Schaltelemente kreuzweise einander gegenüber liegen. Die beiden Brückenschaltungen können seriell zueinander geschaltet sein. Den seriell geschalteten Brückenschaltungen können seriell geschaltete Kondensatoren vorgeschaltet sein, welche an ihrer Verbindungsstelle eine Mittelpunktspannung festlegen, mit welcher jede Brücke verbunden ist.

Bei einem Verfahren zum Ansteuern der obigen Schaltung werden die Schaltelemente einer Brücke jeweils gleichphasig angesteuert und gegenphasig zu den Schaltelementen der hierzu seriell geschalteten Brücke.

Alle beschriebenen Schaltungen können ebenso wie die Batterie (fest) in einem Fahrzeug eingebaut sein.

Die Erfindung wird nachfolgend anhand eines Ausführungsbeispiels beschrieben. Es zeigt:

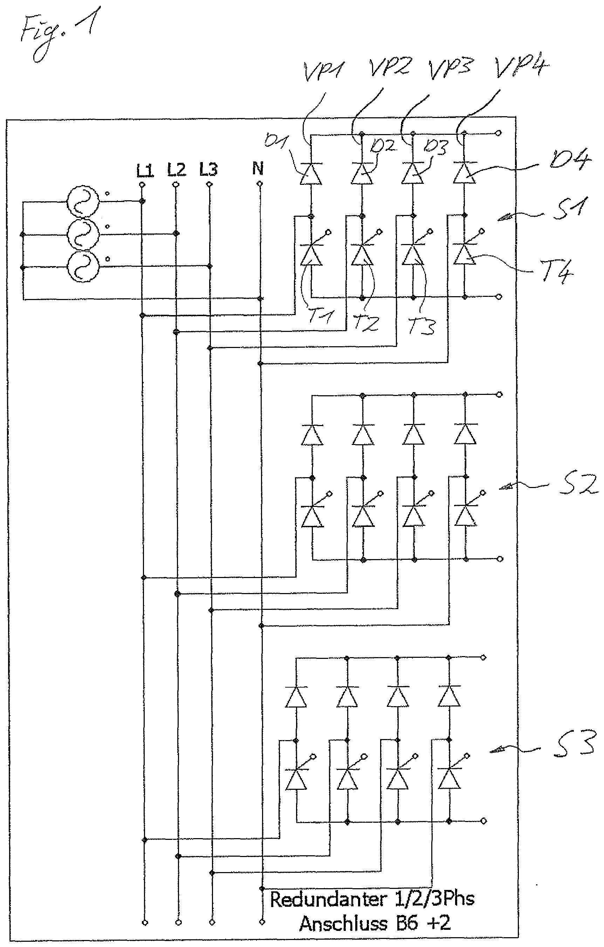

Figur 1 : ein Ausführungsbeispiel von drei Anschlusseinheiten oder Stufen als halbgesteuerte Gleichrichterbrücken.

Eine Batterie-Ladeschaltung kann zum Beispiel in einem Kraftfahrzeug integriert werden. Die in dem Kraftfahrzeug eingebaute Ladeschaltung weist vier Anschlüsse L1, L2, L3 und N auf, welche mit einem externen Versorgungsnetz, wie zum Beispiel einem Drehstromnetz mit Nullleiter, zum Aufladen der Batterien verbunden werden können. Die dem Netz L1, L2, L3 und N entnommene Energie wird mittels eines Ladegerätes so umgewandelt, dass zum Beispiel eine Hochvoltbatterie und eine Niedervoltbatterie parallel oder sequenziell aufgeladen werden können.

Die Netzanschlüsse L1, L2, L3 und N können jeweils abgesichert über eine zum Beispiel 16A-Sicherung mit Netzfiltern verbunden sein, die jeweils vier Signale oder Spannungen ausgeben.

Jedem Netzfilter kann eine Anschlusseinheit oder Stufe und eine Blindleistungskompensationsschaltung nachgeschaltet sein, welche jeweils von einer Steuerung selektiv aktiviert oder angesteuert werden können.

Die zum Beispiel drei Blindleistungskompensationsschaltungen können zueinander parallel geschaltet sein und geben zum Beispiel eine Spannung auf einen Hochvolt-Zwischenkreis aus, an welchem zueinander zum Beispiel parallel geschaltet DC/DC-Wandler hängen, deren Ausgangsstrom zum Laden der jeweiligen Batterien verwendet wird.

Figur 1 zeigt drei jeweils identisch aufgebaute Anschlusseinheiten oder Stufen S1, S2 und S3 zum Anschluss der Ladeschaltung an das Drei-Phasen-Versorgungsnetz L1, L2 und L3 mit Nullleiter N, wobei die drei Stufen S1 bis S3 zueinander parallel geschaltet sind und jede einzelne Stufe S1, S2 und S3 mit jeder Leitung L1, L2, L3 und N des Versorgungsnetzes verbunden ist.

Im Ausführungsbeispiel ist jede einzelne Stufe S1 bis S3 als halbgesteuerte GleichrichterBrücke ausgebildet, wobei der Verbindungspunkt eines aus einer Diode D1 bis D4 und einem Thyristor T1 bis T4 bestehenden Ventilstranges oder Ventilpfades VP1 bis VP4 zu jeweils einer der Leitungen L1, L2, L3 und N des Versorgungsnetzes zwischen der Anode der Diode D1 bis D4 und der Kathode des Thyristors T1 bis T4 angeordnet ist. Insgesamt ist die gleiche Anzahl von (vier) Ventilsträngen oder Ventilpfaden VP1 bis VP4 entsprechend der Anzahl der (vier) Leitungen des Versorgungsnetzes vorgesehen. Die vier Ventilstränge oder Ventilpfade VP1 bis VP4 sind jeweils identisch aufgebaut und zueinander parallel geschaltet, wobei die Ausgangssignale oder Ausgangsspannung an den Kathoden der Dioden D1 bis D4 und den Anoden der Thyristoren T1 bis T4 abgegeben wird. Somit kann jede einzelne Stufe S1, S2 und S3 auf das vollständige Versorgungsnetz L1, L2, L3 und N zugreifen, wobei jeder einzelne Ventilstrang oder Ventilpfad VP1 bis VP4 mittels An- oder Abschalten des jeweiligen Thyristors T1 bis T4 selektiv hinzugeschaltet oder abgeschaltet werden kann. Damit kann jede Stufe S1 bis S3 oder jeder Gleichrichter mit einer beliebigen Phasenzuordnung, gespeist aus dem Versorgungsnetz, als von den anderen Stufen oder Gleichrichter unabhängiger Gleichrichter betrieben werden. Beispielsweise kann die erste Stufe S1 zwischen L1 und L2, die zweite Stufe S2 zwischen L2 und L3 und die dritte Stufe
S3 zwischen L3 und L1 geschaltet werden. Nach Ausfall von zum Beispiel L2 kann zum Beispiel die erste Stufe S1 zwischen L1 und den Nullleiter, die zweite Stufe S2 zwischen L3 und den Nullleiter N geschaltet werden und die dritte Stufe S3 kann unverändert bleiben.

Es ist gemäß einer weiteren Ausführungsform auch möglich eine Parallelschaltung mehrerer halbgesteuerter Gleichrichter, welche jedoch nicht vollständig mit der Versorgungsspannung verbunden sind, vorzusehen. Bei einer solchen Ausführungsform kann zum Beispiel eine erste Gleichrichterbrücke selektiv nur zwischen den Versorgungsspannungsanschlüssen L1, L2 und N geschaltet werden.

Den Gleichrichtern oder Stufen können Blindleitungskompensationsschaltungen (PFC) nachgeschalteten werden, welche jeweils separat von den zugehörigen Stufen oder Gleichrichterbrücken gespeist werden und deren Ausgangsspannungen zu einem Zwischenkreis zusammengeschaltet werden können, welcher nachgeschaltete Gleichstromwandler speist.

Ein Gleichstrom (DC/DC)-Wandler kann mit der von den Blindleistungskompensationsschaltungen PFC erzeugten Zwischenkreis-Spannung beaufschlagt werden. Die Zwischenkreis-Spannung liegt zum Beispiel über seriell geschaltete Kondensatoren an, wobei die Serienschaltung der Kondensatoren oder die gezeigte Kondensatorbrücke eine Eingangsstufe bildet, bei welcher zwischen den seriell geschalteten Kondensatoren ein Mittelpunkt oder eine (möglichst steife) Mittelpunktsspannung gebildet wird, welche jeweils als ein Eingang eines der nachfolgend gezeigten seriell geschalteten Gleichstromwandler dient. Dabei weisen die seriell geschalteten Kondensatoren vorzugsweise die gleiche Kapazität auf.

Die vorgeschalteten seriell geschalteten Kondensatoren liefern jeweils die Eingangsspannung der jeweils nachgeschalteten Brückenschaltung. Eine Brückenschaltung speist die erste Primärwicklung des als Potentialtrennstelle dienenden Transformators, welche zusammen mit der parasitären Induktivität im Brückenzweig liegt. Auf der einen Seite der Brücke ist der Brückenzweig zwischen einem als Schaltelemente dienenden Transistor und der Anode einer Diode geschaltet und auf der gegenüberliegenden Seite zwischen der Kathode einer Diode und einem zweiten Schaltelement verbunden. Die Dioden sind somit parallel und in gleiche Durchfluss- beziehungsweise Sperrrichtung geschaltet, so dass sich der Kondensator nicht über die Dioden entladen kann. Um einen Strom durch die primärseitige Trafowicklung fließen zu lassen, müssen beide Transistoren gleichzeitig angeschaltet werden.

Die zweite Brückenschaltung ist prinzipiell identisch aufgebaut wie die oben beschriebene Brückenschaltung und wird von dem zweiten Kondensator gespeist.

Die Ansteuersignale der ersten Brückenschaltung sind phasengleich und vorzugsweise um 180 Grad zu den Ansteuersignalen der zweiten Brückenschaltung verschoben.

## Patentansprüche

1. Schaltung zur Verbindung einer Ladeeinheit für Akkumulatoren oder Batterien mit einem Versorgungsnetz,
wobei das Versorgungsnetz mindestens zwei Anschlüsse (L1, L2, L3, N) aufweist, wobei die Ladeeinheit mindestens zwei Anschlusseinheiten oder Stufen (S1, S2, S3) aufweist,
wobei jede Anschlusseinheit oder Stufe (S1, S2, S3) die gleiche Anzahl von Ventilpfaden (VP1 - VP4) entsprechend der Anzahl der Anschlüsse (L1, L2, L3, N) des Versorgungsnetzes aufweist,
wobei jeder Ventilpfad (VP1 - VP4) mindestens ein schaltbares Gleichrichtelement oder Thyristor (T1 - T4) aufweist,
wobei jede Stufe (S1, S2, S3) unabhängig von einer anderen Stufe mit jedem der einzelnen Anschlüsse (L1, L2, L3, N) des Versorgungsnetzes verbunden werden kann, oder von jedem der einzelnen Anschlüsse (L1, L2, L3, N) des Versorgungsnetzes getrennt werden kann,
wobei die Verbindung mit jedem der einzelnen Anschlüsse (L1, L2, L3, N) oder die Trennung von jedem der einzelnen Anschlüsse (L1, L2, L3, N) des Versorgungsnetzes individuell steuerbar ist,
**dadurch gekennzeichnet, dass**
die Schaltung eine Steuerung aufweist, welche dazu konfiguriert ist, die Stabilität der Spannung oder Leistungsfähigkeit des Versorgungsnetzes durch Messung der Spannungen und/oder Ströme und/oder Leistungen der einzelnen Anschlüsse (L1, L2, L3, N) des Versorgungsnetzes zu ermitteln,
und in Abhängigkeit von der ermittelten Stabilität der Spannung oder der Leistungsfähigkeit des Versorgungsnetzes einzelne Stufen (S1, S2, S3) selektiv mit einzelnen Anschlüssen (L1, L2, L3, N) des Versorgungsnetzes zu verbinden oder von einzelnen Anschlüssen (L1, L2, L3, N) zu trennen.

2. Schaltung nach Anspruch 1, wobei das Versorgungsnetz drei oder vier oder mehr als vier Anschlüsse oder Phasen hat.

3. Schaltung nach einem der vorhergehenden Ansprüche, wobei drei, oder vier oder mehr als vier Anschlusseinheiten oder Stufen vorgesehen sind.

4. Schaltung nach einem der vorhergehenden Ansprüche, wobei in jeder Anschlusseinheit oder Stufe (S1, S2, S3) drei oder vier oder mehr als vier Ventilpfade (VP1-VP4) vorgesehen sind, wobei jeder Ventilpfad (VP1-VP4) mit einer Leitung oder Phase (L1, L2, L3, N) des Versorgungsnetzes verbunden werden kann und ein oder mindestens zwei Gleichrichtelemente (D1-D4; T1-T4) aufweist.

5. Schaltung nach dem vorhergehenden Anspruch, wobei die Ventilpfade (VP1-VP4) zueinander parallel geschaltet sind oder eine Gleichrichterbrücke bilden.

6. Schaltung nach einem der zwei vorhergehenden Ansprüche, wobei die Gleichrichterbrücke eine vollgesteuerte Gleichrichterbrücke oder eine halbgesteuerte Gleichrichterbrücke ist und mindestens eine Diode (D1-D4) aufweist.

7. Schaltung nach einem der vorhergehenden Ansprüche, wobei die mindestens zwei Anschlusseinheiten (S1, S2, S3) nach jeweils zugeordneten Netzfiltern und/oder vor jeweils zugeordneten Blindleistungskompensationsschaltungen geschaltet sind.

8. Schaltung nach einem der vorhergehen Ansprüche, wobei die Ausgangsseiten der Anschlusseinheiten (S1, S2, S3) seriell oder parallel miteinander verschaltet sind, um einen Zwischenkreis zu bilden.

9. Schaltung nach dem vorhergehen Anspruch, wobei der Zwischenkreis mit einem Gleichstromwandler mit optional vorgeschalteten Kondensatoren verbunden ist, welcher die zur Ladung der Batterien erforderliche Spannung erzeugt.

10. Verfahren zur Steuerung der Verbindung einer Ladeeinheit für Akkumulatoren oder Batterien mit einem Versorgungsnetz,
wobei das Versorgungsnetz mindestens zwei Anschlüsse (L1, L2, L3, N) aufweist,
wobei die Ladeeinheit mindestens zwei Anschlusseinheiten oder Stufen (S1, S2, S3) aufweist,
wobei jede Anschlusseinheit oder Stufe (S1, S2, S3) die gleiche Anzahl von Ventilpfaden (VP1-VP4) entsprechend der Anzahl der Anschlüsse (L1, L2, L3, N) des Versorgungsnetzes aufweist,
wobei jeder Ventilpfad (VP1-VP4) mindestens ein schaltbares Gleichrichtelement oder Thyristor (T1-T4) aufweist,
wobei jede Stufe (S1, S2, S3) unabhängig von einer anderen Stufe mit jedem der einzelnen Anschlüsse (L1, L2, L3, N) des Versorgungsnetzes verbunden werden kann oder von jedem der einzelnen Anschlüsse (L1, L2, L3, N) des Versorgungsnetzes getrennt werden kann,
wobei die Verbindung mit jedem der einzelnen Anschlüsse (L1, L2, L3, N) oder die Trennung von jedem der einzelnen Anschlüsse (L1, L2, L3, N) des Versorgungsnetzes individuell steuerbar ist,
**dadurch gekennzeichnet, dass**
die Stabilität der Spannung oder Leistungsfähigkeit des Versorgungsnetzes durch Messung der Spannungen und/oder Ströme und/oder Leistungen der einzelnen Anschlüsse (L1, L2, L3, N) des Versorgungsnetzes ermittelt wird,
und in Abhängigkeit von der ermittelten Stabilität der Spannung oder der Leistungsfähigkeit des Versorgungsnetzes einzelne Stufen (S1, S2, S3) selektiv mit einzelnen Anschlüssen (L1, L2, L3, N) des Versorgungsnetzes verbunden werden oder von einzelnen Anschlüssen (L1, L2, L3, N) getrennt werden.

## Claims

1. Circuit for connecting a charging unit for accumulators or batteries having a supply network,
wherein the supply network has at least two connections (L1, L2, L3, N),
wherein the charging unit has at least two connection units or stages (S1, S2, S3), wherein each connection unit or stage (S1, S2, S3) has the same number of valve paths (VP1-VP4) as the number of connections (L1, L2, L3, N) of the supply network, wherein each valve path (VP1-VP4) has at least one switchable rectifying element or thyristor (T1-T4),
wherein each stage (S1, S2, S3) can be connected independently of another stage to each of the individual connections (L1, L2, L3, N) of the supply network,
or can be separated from each of the individual connections (L2, L2, L3, N) of the supply network,
wherein the connection to each of the individual connections (L1, L2, L3, N) or the separation from each of the individual connections (L1, L2, L3, N) of the supply network can be controlled individually,
**characterised in that**
the circuit has a control unit which is configured to determine the stability of the voltage or performance of the supply network by measuring the voltages and/or currents and/or performances of the individual connections (L1, L2, L3, N) of the supply network,
and, depending on the determined stability of the voltage or performance of the supply network, to connect individual stages (S1, S2, S3) selectively to individual connections (L1, L2, L3, N) of the supply network or to separate individual stages (S1, S2, S3) from individual connections (L1, L2, L3, N).

2. Circuit according to claim 1, wherein the supply network has three or four or more than four connections or phases.

3. Circuit according to one of the preceding claims, wherein three or four or more than four connection units or stages are provided.

4. Circuit according to one of the preceding claims, wherein three or four or more than four valve paths (VP1-VP4) are provided in each connection unit or stage (S1, S2, S3), wherein each valve path (VP1-VP4) can be connected to a line or phase (L1, L2, L3, N) of the supply network and has one or at least two rectifying elements (D1-D4; T1-T4).

5. Circuit according to the preceding claim, wherein the valve paths (VP1-VP4) are switched parallel to one another or form a rectifier bridge.

6. Circuit according to one of the two preceding claims, wherein the rectifier bridge is a fully controlled rectifier bridge or a half-controlled rectifier bridge and has at least one diode (D1-D4).

7. Circuit according to one of the preceding claims, wherein the at least two connection units (S1, S2, S3) are connected downstream of respectively allocated network filters and/or upstream of respectively allocated reactive power compensation circuits.

8. Circuit according to one of the preceding claims, wherein the output sides of the connection units (S1, S2, S3) are connected in series or in parallel to one another in order to form an intermediate circuit.

9. Circuit according to the preceding claim, wherein the intermediate circuit is connected to a DC-DC converter having optionally upstream capacitors which generates the voltage required to charge the batteries.

10. Method for controlling the connection of a charging unit for accumulators or batteries to a supply network,
wherein the supply network has at least two connections (L1, L2, L3, N),
wherein the charging unit has at least two connection units or stages (S1, S2, S3), wherein each connection unit or stage (S1, S2, S3) has the same number of valve paths (VP1-VP4) as the number of connections (L1, L2, L3, N) of the supply network, wherein each valve path (VP1-VP4) has at least one switchable rectifying element or thyristor (T1-T4),
- wherein each stage (S1, S2, S3) can be connected independently of another stage to each of the individual connections (L1, L2, L3, N) of the supply network,
or can be separated from each of the individual connections (L1, L2, L3, N) of the supply network,
wherein the connection to each of the individual connections (L1, L2, L3, N) or the separation from each of the individual connections (L1, L2, L3, N) of the supply network can be controlled individually,
**characterised in that**
the stability of the voltage or performance of the supply network is determined by measuring the voltages and/or currents and/or performances of the individual connections (L1, L2, L3, N) of the supply network,
and, depending on the determined stability of the voltage or performance of the supply network, individual stages (S1, S2, S3) are selectively connected to individual connections (L1, L2, L3, N) of the supply network or are separated from individual connections (L1, L2, L3, N).

## Revendications

1. Circuit de connexion d'une unité de chargement pour des accumulateurs ou des batteries avec un réseau d'alimentation,
où le réseau d'alimentation comprend au moins deux connexions (L1, L2, L3, N),
où l'unité de chargement comprend au moins deux unités de connexion ou étages (S1, S2, S3),
où chaque unité de connexion ou étage (S1, S2, S3) comporte le même nombre de voies de valve (VP1-VP4) correspondant au nombre de connexions (L1, L2, L3, N) du réseau d'alimentation,
où chaque voie de valve (VP1-VP4) comporte au moins un élément redresseur commutable ou thyristor (T1-T4),
où chaque étage (S2, S2, S3) peut être connecté, indépendamment d'un autre étage, à chacune des connexions individuelles (L1, L2, L3, N) du réseau d'alimentation,
ou peut être déconnecté de chacune des connexions individuelles (L1, L2, L3, N) du réseau d'alimentation,
où la connexion avec chacune des connexions individuelles (L1, L2, L3, N) ou la déconnexion de chacune des connexions individuelles (L1, L2, L3, N) du réseau d'alimentation peut être commandée individuellement,
**caractérisé en ce que**
le circuit comprend une commande qui est configurée pour déterminer la stabilité de la tension ou performance du réseau d'alimentation en mesurant les tensions et/ou courants et/ou puissances des connexions individuelles (L1, L2, L3, N) du réseau d'alimentation,
et pour connecter de manière sélective des étages individuels (S1, S2, S3) avec des connexions individuelles (L1, L2, L3, N) du réseau d'alimentation ou les déconnecter de connexions individuelles (L1, L2, L3, N) en fonction de la stabilité de la tension ou de la performance du réseau d'alimentation déterminées.

2. Circuit selon la revendication 1, où le réseau d'alimentation présente trois ou quatre ou plus de quatre connexions ou phases.

3. Circuit selon l'une des revendications précédentes, où sont prévus trois ou quatre ou plus de quatre unités de connexions ou étages.

4. Circuit selon l'une des revendications précédentes, où trois ou quatre ou plus de quatre voies de valve (VP1-VP4) sont prévues dans chaque unité de connexion ou étage (S1, S2, S3), où chaque voie de valve (VP1-VP4) peut être connectée avec un câble ou phase (L1, L2, L3, N) du réseau d'alimentation et comporte un ou au moins deux éléments redresseurs (D1-D4 ; T1-T4).

5. Circuit selon la revendication précédente, où les voies de valve (VP1-VP4) sont connectées en parallèle, ou forment un pont redresseur.

6. Circuit selon l'une des deux revendications précédentes, où le pont redresseur est un pont redresseur entièrement commandé ou un pont redresseur semi-commandé et comporte au moins une diode (D1-D4).

7. Circuit selon l'une des revendications précédentes, où les au moins deux unités de connexion (S1, S2, S3) sont connectés en aval de filtres d'alimentation respectivement associés et/ou en amont de circuits de compensation de puissance réactive respectivement associés.

8. Circuit selon l'une des revendications précédentes, où les côtés de sortie des unités de connexion (S1, S2, S3) sont connectés en série ou en parallèle de manière à former un circuit intermédiaire.

9. Circuit selon la revendication précédente, où le circuit intermédiaire est connecté à un convertisseur de courant continu avec, en option, des condensateurs connectés en amont, qui génère la tension nécessaire au chargement des batteries.

10. Procédé de commande de la connexion d'une unité de chargement pour des accumulateurs ou batteries avec un réseau d'alimentation,
où le réseau d'alimentation comporte au moins deux connexions (L1, L2, L3, N),
où l'unité de chargement comporte au moins deux unités de connexion ou étages (S1, S2, S3),
où chaque unité de connexion ou étage (S1, S2, S3) comporte le même nombre de voies de valve (VP1-VP4) correspondant au nombre de connexions (L1, L2, L3, N) du réseau d'alimentation,
où chaque voie de valve (VP1-VP4) comporte au moins un élément redresseur commutable ou thyristor (T1-T4),
où chaque étage (S2, S2, S3) peut être connecté, indépendamment d'un autre étage, à chacune des connexions individuelles (L1, L2, L3, N) du réseau d'alimentation, ou peut être déconnecté de chacune des connexions individuelles (L1, L2, L3, N) du réseau d'alimentation,
où la connexion avec chacune des connexions individuelles (L1, L2, L3, N) ou la déconnexion de chacune des connexions individuelles (L1, L2,
L3, N) du réseau d'alimentation peut être commandée individuellement, **caractérisé en ce que**
la stabilité de la tension ou performance du réseau d'alimentation est déterminée en mesurant les tensions et/ou courants et/ou puissances des connexions individuelles (L1, L2, L3, N) du réseau d'alimentation,
et des étages individuels (S1, S2, S3) sont connectés de manière sélective avec des connexions individuelles (L1, L2, L3, N) du réseau d'alimentation ou déconnectés de connexions individuelles (L1, L2, L3, N) en fonction de la stabilité de la tension ou de la performance du réseau d'alimentation déterminées.
